# EUROPÄISCHE PATENTSCHRIFT

(11) **EP 1 190 618 B1**
(45) Veröffentlichungstag und Bekanntmachung des Hinweises auf die Patenterteilung: **08.12.2004**
(21) Anmeldenummer: 01117837.3
(22) Anmeldetag: 23.07.2001
(51) Int. Cl.: A01F 15/14

(54) **Ballenpresse für loses Pressgut**
Bale press for loose material
Presse à balles pour matériau non-aggloméré

(30) Priorität: 23.09.2000 DE 10047336
(43) Veröffentlichungstag der Anmeldung: 27.03.2002
(73) Patentinhaber: Paal GmbH, 49124 Georgsmarienhütte (DE)
(72) Erfinder: Telscher, Thomas, 49078 Osnabrück (DE)
(74) Vertreter: Busse & Busse Patentanwälte

(56) Entgegenhaltungen:
- EP-A- 0 290 180
- DE-U- 29 604 971
- FR-A- 685 597
- US-A- 2 585 425
- US-A- 2 815 234
- US-A- 4 092 913

## Beschreibung

Ballenpressen nach dem Oberbegriff des Anspruchs 1 sind aus dem Bereich der Erntemaschinen seit langem bekannt und erprobt, bei denen zu verpressendes Halmgut über Förderwege und mittels Fördermitteln in einen Füllraum überführt und dort mit einem schwenkbeweglichen Preßstempel in einen Preßraum gestopft wird. Der Preßraum ist mit Bindeeinrichtungen versehen, mit Hilfe derer das Preßgut zu Ballen umschnürt wird. Der Ablauf dieser Vorgänge vollzieht in mechanischer Kopplung, wobei der Antrieb von einer zentralen Antriebswelle ausgeht.

Darüber hinaus hat es bereits Versuche gegeben, das von Erntemaschinen erprobte Systeme auch auf stationäre Pressen, etwa für Altpapier, zu verwenden. Dieser Verwendung kommt insbesondere auch die an den Erntemaschinen ausentwickelte und in Großserien gefertigte Abbindetechnik mit Bandknotern entgegen. Dabei ist das Band dann zwar nicht mehr, wie bei Erntemaschinen mit gut durchstechbarem Halmgut üblich, durch das Halmgut zum Knoter hin zusammenzuführen sondern muß unter Umgehung des Preßguts durch den Kolben hindurch gesteckt werden. Dies ist aber dann, wenn man eine kleine und leichte Bauweise, einen Preßkolben mit weiten Öffnungen und geringe Arbeitskräfte wie bei Erntemaschinen vorsieht, nicht problematisch.

Eine Presse solcher Art ist aus der US-PS 2 815 234 zu ersehen, bei der ein Zuführarm für Bindegut quer um eine unter einem Preßkanal liegende Achse durch weiträumig geschnittene Öffnungen in einem Preßstempel hindurchschwenkt und Bindegut einem in einem Knoter zuführt, während der Preßstempel dabei eine hin- und hergehende Bewegung ausführt. Dies ist eine für Erntemaschinen typische, von einer Antriebswelle ausgehende Bewegung, die allerdings nur für begrenzte Preßkräfte beim landwirtschaftlichen Halmgut geeignet erscheint. Der Bindevorgang ist bei bewegten Preßstempel auszuführen und fängt nur einen unter dem Maximum liegenden Preßzustand auf. Überdies sind Öffnungen und Kanäle für den Zuführarm auf dessen weiten Schwenkbereich auszulegen.

Abfallpressen für den industriellen Bedarf in stationärer Großbauweise arbeiten demgegenüber mit sehr hohen Preßkräften und sind für den störungsfreien Dauerbetrieb auszulegen. Dabei werden generell Drahtumwicklungen vorgesehen, bei denen starke Drähte von Rollen abgespult und bei Fertigstellung eines Ballens und gegebenenfalls auch zum Beginn eines neuen Ballens miteinander durch Verdrillen verbunden werden.

Es hat sich allerdings gezeigt, daß das Drahtmaterial bei der Weiterverarbeitung des Pressguts stört und überaus aufwendige und kritische Arbeitsgänge zur Beseitigung verlangt. So können bei der Zerkleinerung oder Naßverarbeitung von Papierabfällen geschnittene Drahtreste die Verarbeitungsmaschinen stoppen oder beschädigen. Schon beim Transport und der Lagerung der Ballen sind vorstehende verdrillte und endseitig geschnittene Drahtenden störend und unfallträchtig.
Gemäß der Erfindung wird mit kennzeichnenden Merkmalen des Anspruchs 1 eine Gestaltung erzielt, mit der die Knotertechnik auch bei industriellen Großpressen mit hohem Leistungsniveau und Preßkräften nutzbar wird. Dabei ist es ganz wichtig, die Öffnungen im Preßstempel in Form maßgeschneiderter Kanäle auszubilden, die einerseits keine toten Ecken und Bereich für eindringendes Preßgut bilden sondern von den Zuführarmen der Knoter "gefegt" werden und die andererseits mit vorderseitigen Austrittsschlitzen für das Bindegut zwar das Zurückziehen des Stempels nach dem Abbinden ermöglichen, dennoch aber im Gegensatz zu den bei herkömmlichen Ballenpressen auf niedrigem Preßkraft- und Leistungsniveau üblichen weit offenen Bereichen vorsehen, daß die Öffnungen zu Schlitzen auf das für das Durchstecken der Zuführarme in Längsrichtung notwendige Maß reduziert und damit soweit wie möglich gegen ein Eindringen von Preßgut abgesichert sind und daß auch die hohen Preßkräfte mit einer möglichst großen verbleibenden Preßstempelfläche aufgebracht werden. Für dieses Durchstecken ist der Stillstand des Preßstempels wesentlich. Gleichzeitig wird sichergestellt, daß der zu bindende Ballen in seinem vollen Preßzustand gehalten und erst nach dem Binden vom Pressstempel freigegeben wird.

Damit wird die Knotertechnik mit flexiblen Bändern auch für Großpressen einsetzbar, wobei es sich gezeigt hat, daß diese Bänder keineswegs, wie es bisher angenommen wurde, den Drahtumreifungen an Festigkeit unterlegen sind. Eine kritische Überprüfung in dieser Hinsicht hat gezeigt, daß Drahtumreifungen zwar von der Festigkeit des Drahtes her hochbelastbar sind, an den Verdrillungen aber Schwachstellen mit sehr viel geringerer Belastbarkeit und einem hohem Bedarf an Sicherheitsreserven darstellen, mit denen sich sehr begrenzte Werte ergeben. Bei flexiblem Bindegut und einer Knotentechnik lassen sich sehr hohe Festigkeiten sowohl beim Bindegut wie an der Verknotung realisieren, wobei diese Ergebnisse mit geringen Untersicherheiten eintreten. Von der Festigkeit der Umgürtung her läßt sich hiernach kein zwingendes Erforderniß für die Verwendung von Drahtumgürtungen mehr aufrechterhalten.

Beim Bindegut lassen sich vom Markt her mit einer Vielzahl nichtmetallischer Fasern textile oder kunststoffgebundene Materialien vorsehen, die den hier zu erfüllenden Erfordernissen genügen. Es erscheinen sogar insbesondere für die Umgürtung von Altpapierballen Bindematerialien in unlösbarer, etwa naß auflösbarer Form, auch mit feiner und kurzen Form für ein Recycling oder auf Papierbasis verwendbar, die im nachfolgenden Recyclingprozeß nicht ausgesondert müssen, vielmehr in das Ausgangsmaterial für das Recyclingprodukt eingehen können.

Eine solche Ballenpresse kann dann, wie es bei der herkömmlichen Technik der hydraulischen Großpressen mit Drahtabbindungen schon an sich üblich ist, in einer sequenziellen Folge druckmittelbetätigter Bewegungen betrieben werden, bei denen nun die Knoterfunktion erst nach Abschluß einer einen Ballen vervollständigenden Presshubbewegung des Preßstempels ausgelöst wird und dann der Zuführarm erst bei stillstehendem Preßstempel durch diesen hindurch fährt. Damit lassen sich nicht nur zusätzliche Öffnungsräume im Kolben vermeiden, die bei mechanisch gekoppelten und einander überschneidenden Bewegungen der Landmaschinen von Stempel und Zuführarm sonst nötig sind, sondern vor allem auch die erforderlichen hohen Preßkräfte aufbringen und bis zum fertigen Binden aufrechterhalten.

Für die zur Umgürtung eines Ballens vorzusehenden Bandschleifen ist prinzipiell ein einziger Knoten je Bandschleife nötig, so daß die Bandschleife insgesamt nur aus einem einstückigem Bandabschnitt besteht. Diese Technik hat den Vorteil, daß nur ein Knoten herzustellen ist, so daß, wenn man den Knoten hinsichtlich seiner Haltbarkeit noch mit einer Restunsicherheit ansetzt, insofern nur eine Unsicherheitsstelle verbleibt. Diese Technik hat allerdings den Nachteil, daß nach dem Knoten und Abschneiden das freie Ende des Bindeguts für den nachfolgenden Ballen am Knoter gehalten werden muß und das sich das Band dann beim Bilden und Einschieben eines neuen Ballen nach und nach entsprechend dem Wachsen des Ballens an dessen Umfang verschieben muß, was zu hohen relativen Bandbewegungen gegenüber dem Ballen und auch zu kritischen Belastungen führt.

Eine alternative Abbindetechnik sieht vor, daß das Bindegut in zwei Strängen von zwei einander gegenüberliegenden Rollen o. dgl. Vorräte abgezogen wird und daß der Knoter vor und hinter der Schnittstelle je einen Knoten anbringt, von denen der eine die Umgürtung für den fertigen Ballen schließt, der andere die beiden neuen offenen Stränge zu einer Schleife verbindet. Diese Schleife und die beiden Stränge können dann ohne nennenswerte Relativverschiebung zum Ballen mit dessen Anwachsen mitlaufen.

Ein Ausführungsbeispiel der Erfindung ist in der Zeichnungen dargestellt und wird nachfolgend näher beschrieben. In der Zeichnung zeigen:

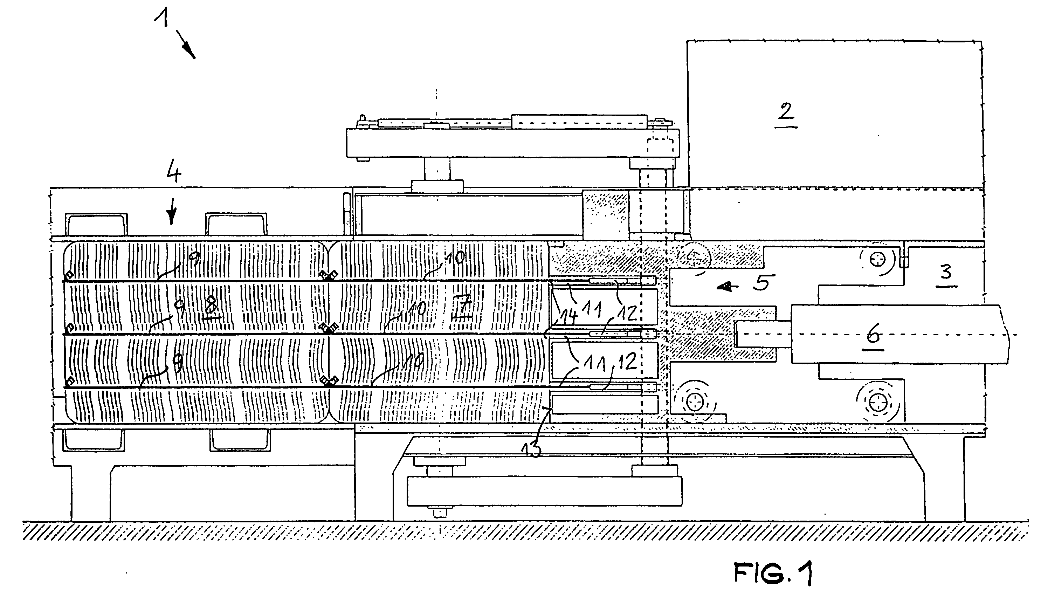

Fig. 1 Einen Vertikalschnitt durch eine Kanalbahnpresse
Fig. 2 bis 7 Horizontalschnitte durch die Kanalpresse nach Fig. 1 bei verschiedenen Situationen des Abbindevorgangs.

Die in der Zeichnung insgesamt mit 1 bezeichnete Kanalballenpresse ist jeweils nur in einem zentralen Bereich mit einem Teil eines Einfüllschachtes 2 über einem darunterliegenden Füllraum 3 und dem angrenzenden Teil eines Presskanals dargestellt, wobei ein Preßstempel 5 mit einem zugehörigen Kolben 6 eines hydraulischen Stellgliedes in vorgeschobener Stellung im Füllraum 3 und dem Eingang des Presskanals 4 steht, wo er einen fertiggestellten aber noch nicht abgebundenen Ballen 7 unter Pressdruck hält, während ein zuvor fertiggestellter und bereits abgebundener Ballen 8 im Preßkanal 4 als "Wiederlager" für den Ballen 7 sitzt. Der insoweit beschriebene Aufbau entspricht dem herkömmlicher industrieller Ballenpressen mit hydraulischen Antriebsvorrichtungen und einer auf Drahtumwicklungen basierenden Abwickeltechnik.

Im vorliegenden Fall werden die Ballen allerdings mit bandförmigem, flexiblem Bindegut gehalten, so daß der textile Ballen 8 bereits mit drei übereinander liegenden Umgürtungen 9 fixiert ist, während der Ballen 7 noch nicht abgebunden ist aber bereits an drei Seiten durch drei offene Bandschleifen 10 eingefaßt ist.

Zum Schließen dieser Bandschleifen 10 wird jeweils eine von zwei beidseitigen Strängen des Bindeguts durch den Preßstempel zum anderen Strang hindurch geführt, wozu der Preßstempel Kanäle 11 aufweist, die hier passend zu der horizontalen Abbindung horizontal verlaufen. Es versteht sich, daß die alternativ mögliche vertikale Abbindung zu vertikalen Kanälen führen würde. Die Kanäle sind eng angepaßt an den Platzbedarf von drei Zuführarmen 12 und münden in einer vorderseitigen Preßstempelfläche in Schlitzen 14 aus, die eine möglichst kleine Weite für den Eintritt von Preßgut in den Preßstempel 5 bieten.

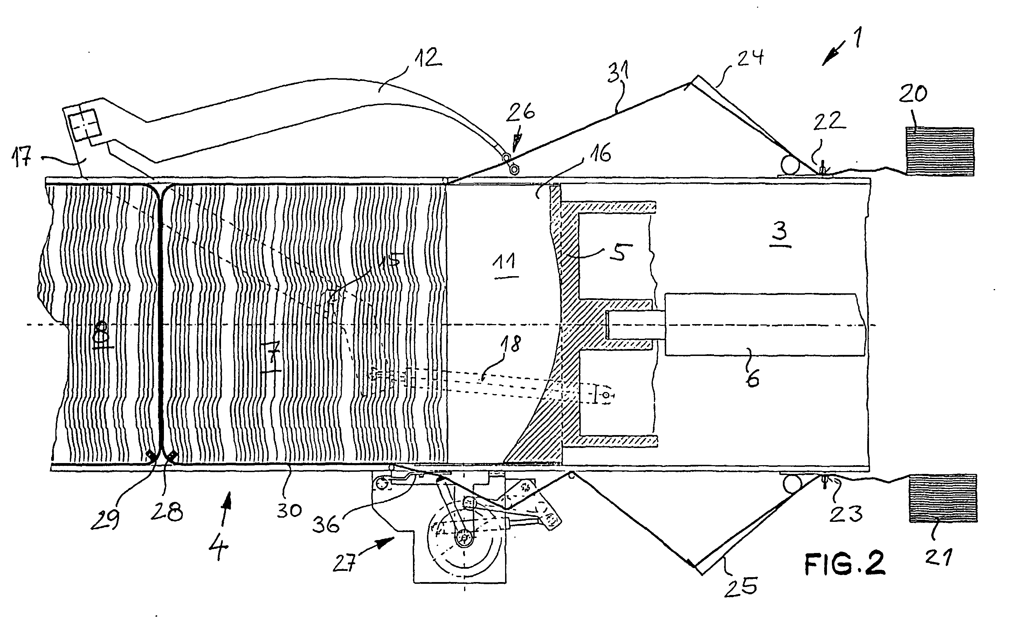

Wie sich aus den Horizontalschnitten nach den Figuren 2 bis 7 ergibt, ist der jeweilige Kanal 11 auch in seiner Tiefe an das Bewegungsprofil des Zuführarms 12 angepaßt, um "tote Ecken" zu vermeiden, in denen sich bei hohen Belastungen und Dauerbetrieb sonst sehr leicht Preßgut ablagern und verdichten kann und mit der Zeit leicht zu Betriebsstörungen führt, die auch schwierig zu behandeln sind. Der Kanal 11 wird somit von dem Zuführarm 12 bestimmt, der sich durch den Kanal 11 vor- und rückbewegt, wobei er eine Kreisbewegung um eine Achse 15 ausführt. Dabei wird eindringendes Material, z. B. blattförmiges Papier, zur einen oder zur anderen Seite hin ausgeschoben. In dieser Hinsicht weist der Preßkanal 11 noch eine endseitige Aufweitung 16 gegenüber der Kreisbogenkontur auf, um einen Auswurf des Preßguts aus diesem Bereich zu erleichtern.

Der Zuführarm 12 hat eine Sichelform, mit der er weitgehend in Längsrichtung durch den Kanal 11 hindurch zu bewegen ist. Dabei wird er über einen zweiarmigen Hebel 17 von einem hydraulischen Druckmittelantrieb 18 außerhalb des Preßkanals betätigt.

Das Band wird von zwei Seiten dem Preßkanal 4 zugeführt, und zwar jeweils einer von zwei Rollen 20, 21 über jeweils eine von zwei einstellbaren Reibführungen 22, 23 als Fadenbremsen zum reibschlüssigen Aufrechterhalten einer Fadenspannung, die dann über federnde Führungen 24, 25 und geeignete Umlenkungen zum einen durch eine Führung 26 des Zuführarms 12 und zum anderen durch einen Knoter 27 hindurch um den neuen Ballen 7 herum bis zu einem Knoten 28 zu einer Schleife zusammenlaufen. Ein benachbarter Knoten 29 am bereits fertiggestellten Ballen 8 zeigt in Verbindung mit den doppelt vorhandenen Rollen 20 und 21 als Bindegutvorrat, daß hier zwei Knoten je Schnittstelle und zu jeder Seite von dieser Schnittstelle angebracht werden sollen, um eine leichte beidseitige Bandzuführung zu erhalten.

Die Fig. 2 dargestellte Ruhestellung des Knoters 27 und des Zuführarms 12 bleibt normalerweise während mehrerer Preßhübe des Preßstempels 5 erhalten, der mit jedem Preßstempelhub einen Teilballen ergänzt (hat) bis ein kompletter Ballen vorgegebener Mindestlänge erreicht ist. Dabei bewegt sich die am Knoten 28 geschlossene Bandschleife 30 entsprechend der Vervollständigung des Ballens 7 bis in die dargestellte Ausgangsposition für ein Verknoten.

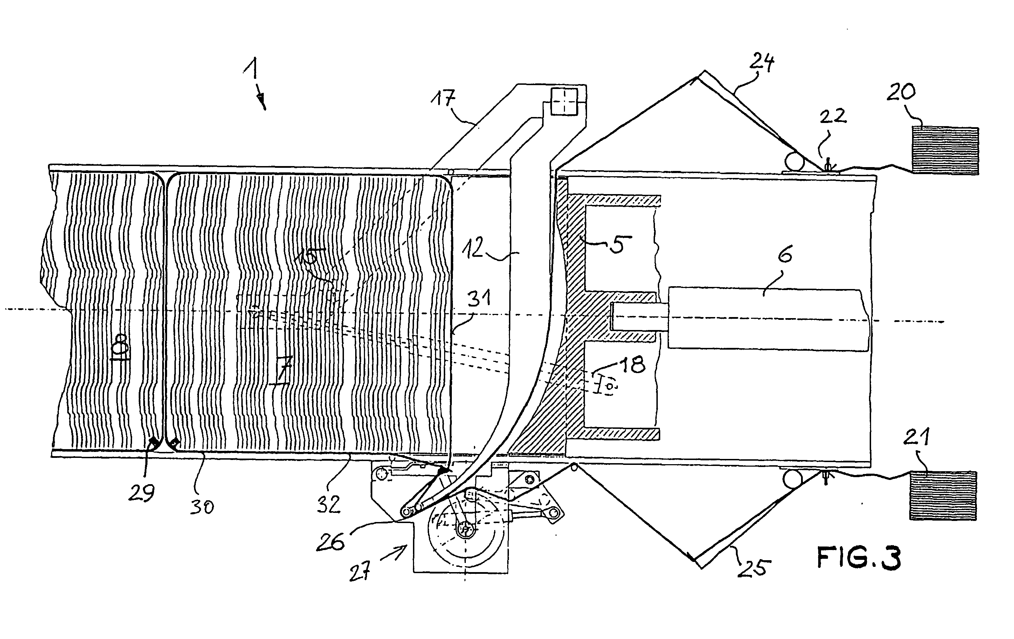

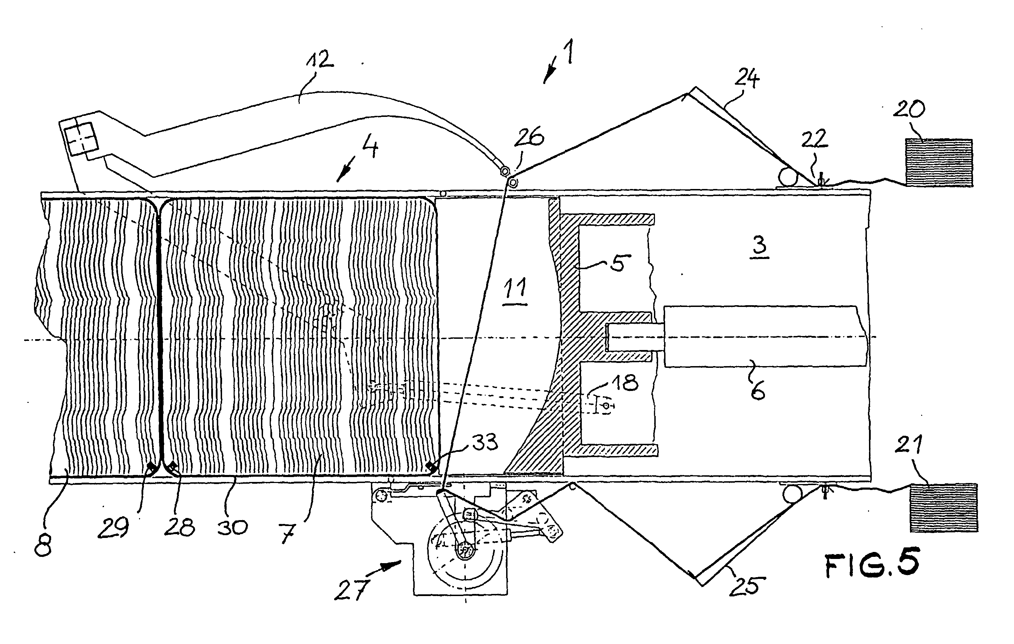

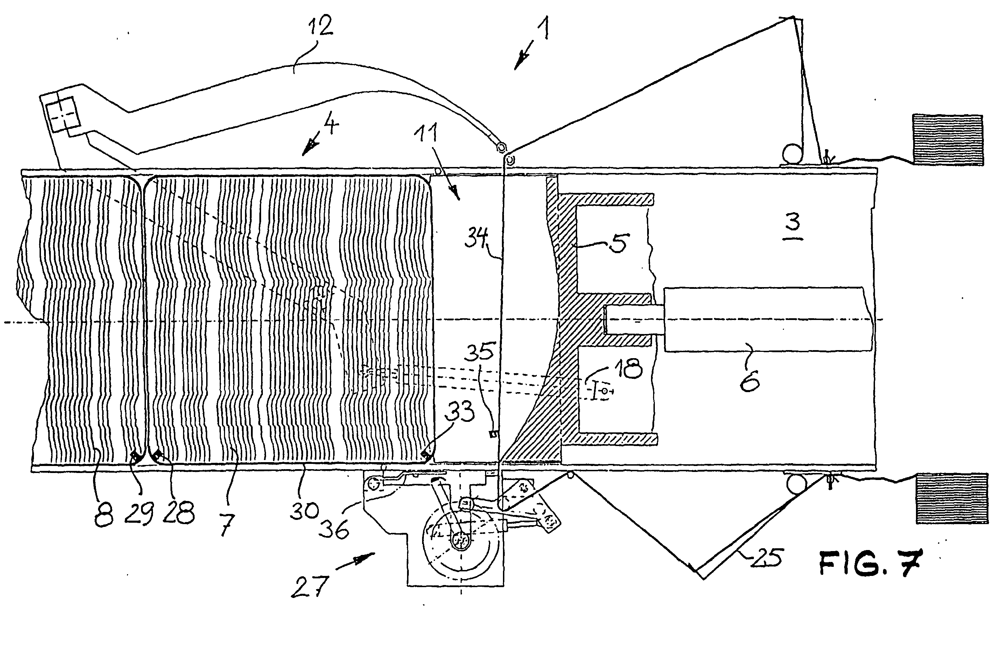

Fig. 3 zeigt dann, wie der Zuführarm 12 mit einem Strang 31 der Bandschleife 30, der auf seiner Ausgangsseite liegt, durch den Kolben 5 hindurch geschwenkt ist und dabei diesen Strang 31 im Bereich des Knoters 27 mit einem gegenüberliegenden Strang 32 der Bandschleife 30 zusammengeführt hat. Mit einer Umlauf- und Durchziehbewegung des Knoters wird die Schleife 30 in Form eines Knotens 33 geschlossen und hinter dem Knoten von den Vorratsrollen 20 und 21 abgetrennt, wobei die Enden des Bindeguts zusammen festgehalten und auch verknotet werden (Fig. 5) bevor der Zuführarm 12 in seine Ausgangsauslage zurückkehrt (Fig. 7). Die neue Schleife 34, durch den neuen Knoten 35 gehalten, wird beim Zurückfahren des Zuführarms 12 durch die federnden Führungen 24 und 25 straff gehalten.

Der Aufbau des Knoters und der Knotvorgang im einzelnen bedürfen keiner vollständigen Erörterung, da es sich um eine Basistechnik handelt, die in verschiedenen Varianten langzeitig vor allem im Bereich der Erntemaschinen bekannt und erprobt ist. Bei Erntemaschinen gibt es einen zentralen, fortlaufenden Antrieb, der die beteiligten Funktionselemente in enger, starrer Kopplung miteinander bewegt. Wesentlich für die hier vorgesehene Betätigung mit verschiedenen Antrieben ist die Möglichkeit, auch bei kritischem Preßgut und hohem Preßdrücken einen möglichst störungsarmen Antrieb zu erzielen, wobei die verschiedenen Bewegungsabläufe vom Startzeitpunkt von der Dauer her gesondert abgestimmt werden können.

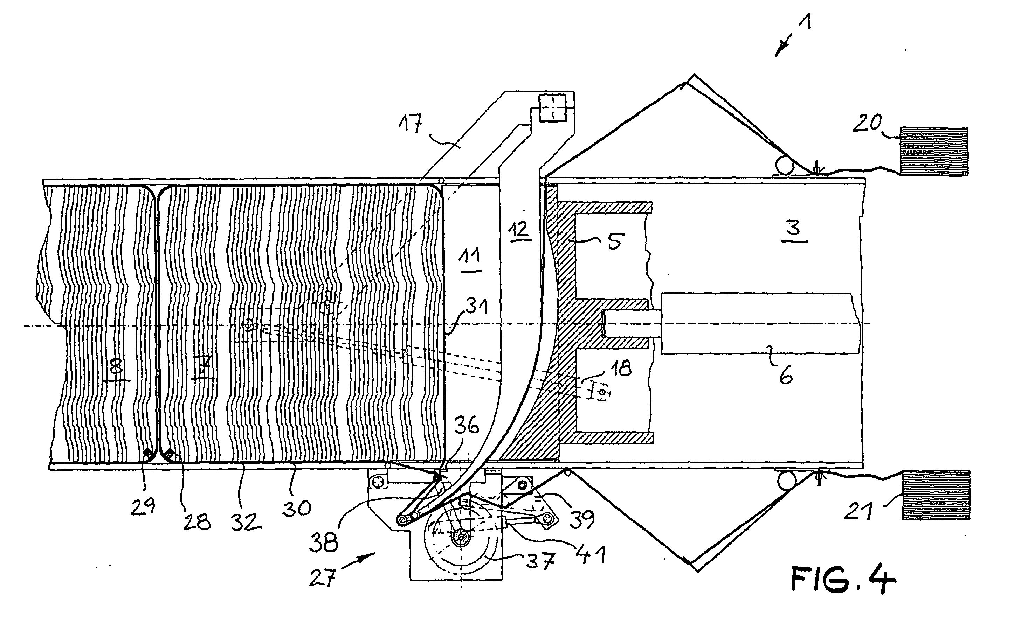

Wie sich anhand der Fig. 4 zeigt, sind die beiden Stränge 31,32 in einem Bereich eng aneinander zu schmiegen, in dem der neue Knoten 33 gebildet werden soll. Hierzu schwenkt ein in Fig. 2 zunächst in der Queransicht erscheinender Fadendrücker 36 um eine parallel zur Zeichnungsebene verlaufende Achse und verschiebt das benachbarte Ende des Strangs 31 zum Strang 32 hin. Diese Andrückbewegung erfolgt allerdings nicht, wie bei einer den gekoppelten Bewegungen der Erntemaschinen, im zeitlichen Zusammenspiel mit der Bewegung des Zuführarms 12, sondern erst in zeitlichem Abstand danach. Es geht vor allem darum, daß der Zuführarm 12 bei seiner Vorbewegung durch den Kanal 11 alles etwa in den Kanal 11 hineingelangte Fremdmaterial auswerfen und auch seine Endlage erreicht haben soll, ehe das Verknoten mit der Andrückbewegung des Andrückers 36 eingeleitet wird.

Die überaus komplexen aber bekannten und ausentwickelten Bewegungen im Knoter 27 werden von einer Steuerscheibe 37 mit geeigneten Steuernocken erzwungen, die auf eine mit entsprechenden Fingern versehene Knotermechanik 38 (nicht in Einzelheiten veranschaulicht) einwirkt. Diese Bewegungen führen dazu, daß die beiden Stränge auf der Zuführseite des Bindegarns zusammen erfaßt und gehalten, zum Knotenbereich hin abgeschnitten und dort mit einander verknotet werden.

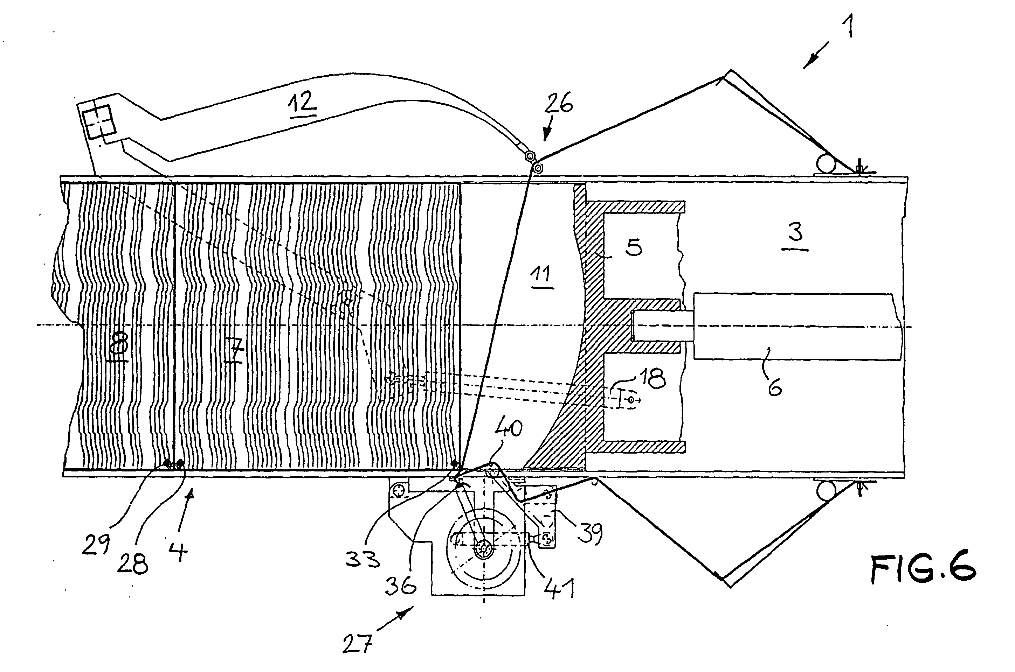

Um die im Knoter 27 zunächst nur unverknotet miteinander zusammen festgehaltenen freien Enden des Endegarns zu einer neuen Schleife zu schließen, in dem diese durch den zweiten Knoten 32 verbunden werden, schafft der Zuführarm 12 zunächst einmal freien Bewegungsraum gemäß Fig 6, indem er aus dem Kolben 5 heraus in seine Ausgangsposition zurückfährt. Zum Verknoten müssen nicht nur die Schnittenden des Bindeguts, sondern auch die anschließenden Bereiche enger zusammengebracht werden, um das Bindegut zum Verknoten annähernd parallel zu führen. In dieser Hinsicht bewegt sich eine Bandwippe 39 am Knoter 27 so, daß der von der Rolle 21 ablaufende Garnstrang zu dem von der Rolle ablaufenden Garnstrang hin angedrückt wird und zwar mit Hilfe einer Andrückrolle 40. Gleichzeitig mit der Garnwippe 39 wird für den zweiten Knoten wieder der fadendrücker 36 herangeschwenkt, um die beiden Bindegarnenden zusammenzubringen. Auch diese Bewegungen werden zeitlich unabhängig und in einer auf die Sicherheit des Verknotens gerichteten Abfolge vorgegeben. Dazu wird die Garnwippe 39 durch ein druckmittelbetätigtes Stellglied 41 verschwenkt, nachdem der Zuführarm 12 seine Bewegung abgeschlossen hat. Auch dieser ist eigenständig betätigt und zwar über den Druckmittel-Stellantrieb 18.

Vorteilhaft für die Umsetzung der Erntemaschinen-Abbindetechnik ist der Betrieb mit hydraulischen Stellgliedern. In dieser Hinsicht ist es für die Abstimmung und Anpassung des überaus kritischen Preßstempelbereichs günstig, daß der Preßstempel nicht etwa, wie bei den Erntemaschinen üblich, eine fortlaufende Bewegung um seinen vorderen Totpunkt ausführt, wenn der Zuführarm zum Knoter geht, sondern dabei stillsteht. Hier läßt sich eine sorgfältige Abstimmung der Kolbenöffnungen auf das Bewegungsprofil des Zuführarms erzielen. Im übrigen ist dabei auch dann sicherzustellen, was bei hoher Leistung und hohen Preßkräften sehr bedeutsam wird, daß der Kolben in seiner vorderen Endstellung stehen bleibt und dabei den fertiggestellten Ballen unter Druck hält, nicht also schon während des Abbindevorgangs wieder über seinen Totpunkt hinaus zurückfährt.

Es hat sich aber gezeigt, daß diese Technik im Bereich industrieller schwerer und stationärer Kastenballenpressen, vor allem aber Kanalballenpressen vorteilhaft einsetzbar ist, wenn den Anforderungen des Preßgutes wie etwa der Papierabfälle, den hohen Preßkräften und dem Dauerbetrieb durch eine besondere Gestaltung des Abbindebereichs Rechnung getragen werden kann.

## Patentansprüche

1. Ballenpresse (1) für loses Preßgut, insbesondere Papier, mit einem Füllraum (1) für lose einzugebendes Preßgut, einem durch den Füllraum hindurch in den Eingang eines Preßkanals (4) oder eines sonstigen Preßraums beweglichen Preßstempels und mehreren nebeneinander angeordneten Knotern (27) für Bindegut am Eingang des Preßkanals, in denen jeweils zwei einander gegenüberliegende Stränge (30, 31) einer den Ballen (7) vorderseitigen umlaufenden Bandschleife (10) des Bindeguts zusammengeführt, miteinander verknotet und nach dem Knoten geschnitten werden, wobei der zugehörige Knoter einen der beiden Stränge (31) mit einem Zuführarm (12) durch Öffnungen im Preßstempel (5) hindurch zugeführt erhält, die im Preßstempel Kanäle (11) bilden, die an das Bewegungsprofil der Zuführarme (12) angepaßt sind und zu einer vorderseitigen Preßstempelfläche in Austrittsschlitzen (14) für das Bindegut offen sind, **dadurch gekennzeichnet, daß** der Antrieb (6) des Preßstempels (5) und ein den Zuführarm (12) bewegender Antrieb (18) druckmittelbetätigte, vorzugsweise hydraulische Antriebe sind, daß der Preßstempel (5) einen bei der Zuführbewegung des Zuführarms stillstehenden Antrieb (6) aufweist und daß der Zuführarm (12) im wesentlichen in seiner Längsrichtung durch die hieran angepaßten Öffnungen (11) des Preßstempels (5) bewegt wird.

2. Ballenpresse nach Anspruch 1, **dadurch gekennzeichnet, daß** die Bandschleifen jeweils aus unverknotetem Bindegut bestehen, das aus einem einzigen, einseitigen Bindegutvorrat zugeführt wird, wobei nach dem Abschneiden ein freies Ende des Bindesguts im Knoter gehalten wird.

3. Ballenpresse nach Anspruch 1 bis 3, **dadurch gekennzeichnet, daß** die Bandschleifen (10) jeweils aus zwei verknoteten Strängen (30, 31) des Bindeguts bestehen, die beidseitig aus jeweils einem Bindegutvorrat (20, 21) zugeführt werden, wobei der Knoter (27) die beiden Stränge mit zwei Knoten (33, 35) versieht, zwischen denen die beiden Stränge geschnitten werden.

4. Ballenpresse nach Anspruch 1 oder 2, dadaurch gekennzeichnet, daß das Bindegut aus einem naß auflösbaren Material ohne starke und lange Fasern besteht.

## Claims

1. Bale press (1) for loose material, in particular paper, with a filling chamber (1) for loose press material to be introduced, a press stamp movable through the filling chamber into the entrance of a press channel (4) or another press chamber, and several knotting devices (27) arranged next to one another for binding material at the entrance of the press channel, in which in each case two mutually-opposing strands (30, 31) of a band loop (10) of the binding material, running around the bales (7), are guided together on the front side, knotted together, and cut after the knots, whereby the knotting device concerned receives one of the two strands (31) fed to it by a guide feed arm (12) through apertures in the press stamp (5), which form channels (11) in the press stamp, which are adapted to the movement profile of the feed arms (12) and are open to a press stamp surface on the front side in outlet slots (14) for the binding material, **characterised in that** the drive unit (6) of the press stamp (5) and a drive unit (18) moving the feed arm (12) are drive units actuated by pressure media, for preference hydraulic drives, that the press stamp (5) exhibits a drive unit (6) which is stationary during the feed movement of the feed arm, and that the feed arm (12) is moved essentially in its longitudinal direction through the apertures (11) of the press stamp (5) adapted to it.

2. Bale press according to claim 1, **characterised in that** the band loops consist in each case of non-knotted binding material, which is fed from a single binding material storage unit on one side, whereby, after cutting off, a free end of the binding material is held in the knotting device.

3. Bale press according to claims 1 to 3, **characterised in that** the band loops (10) consist in each case of two knotted strands (30, 31) of the binding material, which are fed on both sides in each case from a binding material storage unit (20,21), whereby the knotting devices (27) provide both strands with two knots (33,35) between which the two strands are cut.

4. Bale press according to claim 1 or 2, **characterised in that** the binding material consists of a material which dissolves when wet, without strong and long fibres.

## Revendications

1. Presse à balles (1) pour matériau non aggloméré, en particulier du papier, avec une chambre de remplissage (1) pour le matériau à introduire non aggloméré, un fouloir de presse mobile à travers la chambre de remplissage dans l'entrée d'un conduit de presse (4) ou d'une autre chambre de presse et plusieurs noueuses (27) disposées les unes à côté des autres pour un produit de liage à l'entrée du conduit de presse, dans chacune desquelles deux brins (30,31) se faisant face d'une boucle sans fin (10) entourant par la face avant la balle (7) sont rapprochés, noués l'un avec l'autre et coupés après le noeud, la noueuse concernée recevant un des deux brins (31) avec un bras d'amenée (12) à travers des ouvertures dans le fouloir de presse (5) qui forment dans le fouloir de presse des conduits (11) qui sont adaptés au profil de déplacement des bras d'amenée (12) et sont ouverts vers une face avant du fouloir de presse dans des fentes de sortie (14) pour le produit de liage, **caractérisée en ce que** le dispositif d'entraînement (6) du fouloir de presse (5) et un dispositif d'entraînement mouvant le bras d'amenée (12) sont des dispositifs d'entraînement (18) mus par un fluide sous pression, de préférence hydrauliques, **en ce que** le fouloir de presse (5) présente un dispositif d'entraînement (6) immobile lors du mouvement d'amenée du bras d'amenée et **en ce que** le bras d'amenée (12) est mû essentiellement dans sa direction longitudinale par les ouvertures (11) du fouloir de presse (5) adaptées à cet effet.

2. Presse à balles selon la revendication 1, **caractérisée en ce que** les boucles sans fin sont constituées chacune d'un produit de liage non noué qui est amené depuis une unique réserve unilatérale de produit de liage, une extrémité libre du produit de liage étant maintenue dans la noueuse après la coupure.

3. Presse à balles selon les revendications 1 à 3, **caractérisée en ce que** les boucles sans fin (10) sont constituées chacune de deux brins noués (30, 31) du produit de liage qui sont amenés des deux côtés chacun depuis une réserve de produit de liage (20, 21), la noueuse (27) dotant les deux brins de deux noeuds (33, 35) entre lesquels les deux brins sont coupés.

4. Presse à balles selon la revendication 1 ou 2, **caractérisée en ce que** le produit de liage est constitué par un matériau se désagrégeant à l'humidité sans fibres solides et longues.
